# EUROPEAN PATENT APPLICATION

(11) **EP 4 778 907 A1**
(43) Date of publication of application: **22.07.2026**
(21) Application number: 26152071.2
(22) Date of filing: 15.01.2026
(51) Int. Cl.: C04B 41/00, C04B 41/52, C04B 41/89

(54) **ENVIRONMENTAL BARRIER COATINGS**

(30) Priority: 15.01.2025 US 202519021998
(71) Applicant: RTX Corporation, Farmington, CT 06032 (US)
(72) Inventor: LITTON, David A., West Hartford, 06107 (US); ROHBECK, Nadia, Milford, 06460 (US)
(74) Representative: Dehns

(57) **Abstract**

Environmental barrier coatings (EBCs) (160) are disclosed having a topcoat layer (130) having a primary hafnon phase (150) and a dispersed hafnia phase (140). The hafnia can be homogeneously dispersed or the layer (130) can exhibit a concentration gradient in which the hafnia concentration increases continuously or stepwise. The hafnon primary phase (150) provides a desirable CTE match with the underlying CMC substrate (110), while the dispersed hafnia (140) provides desirable corrosion resistance.

## Description

The subject matter disclosed herein relates to coatings used in high temperature environments, and, in particular, relates to environmental barrier coatings for use on jet engine components.

### BACKGROUND OF THE INVENTION

Gas turbine engines, in general, include a fan section, a compressor section, a combustion section, and a turbine section. The fan section pulls air into the engine and the air is then compressed in the compressor section before being introduced into the combustion section. In the combustion section, the air is mixed with fuel and ignited to generate a high-energy, high temperature gas flow. The high-energy, high temperature gas flow is expanded in the turbine section which is used to create thrust and to drive the compressor and fan sections.

As a result, turbomachinery, such as gas turbine engines, have components that are exposed to hostile environments due to high temperatures. These components include, for example, turbine blades, turbine vanes, blade outer air seals, and combustor liners. For this reason, it is desirable that such components be made of heat-resistant materials such as superalloys or ceramic matrix composites (CMCs). While CMC materials can withstand much higher operating temperatures than superalloys, CMC components are susceptible to erosion/degradation due to exposure to the high temperatures and corrosive agents (e.g., water vapor) associated with the high-energy, high temperature gas flow from the combustion section.

CMC materials can contain SiC. Exposure of SiC to oxygen can result in the SiC reacting with O₂ to form silica (SiO₂). If high temperature water vapor is present, then the silica can react with H₂O to form gaseous reaction products such as Si(OH)₄. This process results in volatilization of Si from the SiC material causing erosion/degradation of the CMC component. For these reasons, CMC components can be provided with coatings to enhance their ability to withstand high temperatures and to protect the underlying substrates from the corrosive agents such as water vapor present in the high-energy, high temperature gas flow.

For example, jet engine components having a CMC substrate can be provided with environmental barrier coatings (EBCs) applied to the surface thereof to protect the substrate from corrosive forces due to, for example, exposure to high temperature water vapor. EBC coatings are made of materials that are resistant to the corrosive gases such as water vapor present in the high-energy, high temperature gas flow. Also, in order to limit infiltration of corrosive gases such as water vapor, it is desirable for the EBC coating system to be dense, i.e., exhibit low porosity in order to minimize vapor permeability. This reduces exposure of the surface and interior (via penetration through pores and cracks) of CMCs to high temperature water vapor, thereby reducing degradation of CMCs and extending the operational lifespan of components made therefrom. In addition, the EBC coating system needs to provide good adherence to the underlying CMC substrate to avoid spallation or delamination.

Further, at the CMC substrate/EBC interface, the EBC system desirably has a coefficient of thermal expansion (CTE) that is similar to that of the CMC substrate. If the difference in CTE is high, the heating and cooling that occurs during operation of the engine can lead to crack formation due to the stresses induced by the repeated expansion and contraction. These cracks provide a quick access path for oxidative species to reach the underlying CMC material and thus are detrimental to EBCs performance in protecting the substrate from attack by corrosive water vapor. Further, such cracks can lead to delamination/spallation of the EBC coating system thus reducing the operational lifespan of the coating and of the underlying CMC component.

There exists a continuing need for materials, methods, and techniques for producing EBC coatings that result in enhanced properties of such coatings and/or facilitate the manufacture thereof.

### SUMMARY OF THE INVENTION

In general, the present disclosure relates to EBC coating systems that exhibit favorable CTE match with underlying CMC substrates and good corrosion resistance to high temperature steam environments. In particular, the present disclosure relates to EBC systems that exhibit a hafnium silicate (hafnon) layer containing a hafnium oxide (hafnia) phase distributed therein.

The present disclosure is directed, in a first aspect, to a coated substrate composite comprising:
a ceramic matrix composite substrate comprising ceramic fiber tows within a ceramic matrix;
an environmental barrier coating (EBC) system applied to the substrate wherein the coating system comprises a layer having a primary hafnon phase and a dispersed hafnia phase.

In yet another example, the present disclosure is directed to a method of preparing a coated substrate comprising:
providing ceramic matrix composite substrate comprising ceramic fiber tows within a ceramic matrix;
applying an environmental barrier coating (EBC) system to the substrate, wherein the coating system comprises a layer having a primary hafnon phase and a dispersed hafnia phase; and
the layer is applied by: (a) thermal spraying a powder composition containing hafnium silicate or a powder composition containing a mixture of hafnium oxide powder and silica powder; or (b) slurry coating wherein the slurry contains hafnium silicate particles and hafnia particles.

In yet another example, the present disclosure is directed to a jet engine component comprising:
a ceramic matrix composite substrate comprising ceramic fiber tows within a ceramic matrix;
an environmental barrier coating (EBC) system applied to the substrate wherein the coating system comprises a layer having a primary hafnon phase and a dispersed hafnia phase.
wherein the component is a turbine blade, turbine vane, blade outer air seal, or combustor liner.

In further examples of the present disclosure, including further examples of the above, the layer having a primary hafnon phase and a dispersed hafnia phase is a topcoat layer and the EBC system further includes a bond coat layer between the substrate and the topcoat layer.

In further examples of the present disclosure, including further examples of the above, the substrate is a SiC/SiC composite.

In further examples of the present disclosure, including further examples of the above, the bond coat layer is a Si-containing material.

In further examples of the present disclosure, including further examples of the above the bond coat layer has a thickness of 1 to 1000 µm.

In further examples of the present disclosure, including further examples of the above, the dispersed hafnia phase is evenly distributed throughout the hafnon phase.

In further examples of the present disclosure, including further examples of the above, the layer has a hafnia concentration gradient wherein the hafnia content increases from an interface of the CMC substrate and EBC coating system to top surface of the layer.

In further examples of the present disclosure, including further examples of the above, the layer has a hafnia concentration gradient wherein the hafnia concentration is 0-30 vol.% at a CMC substrate/EBC coating system interface and the hafnia concentration increases through the thickness of the layer to a hafnia concentration of 20-100 vol.% at a top layer of the surface.

In further examples of the present disclosure, including further examples of the above, the size of the dispersed particles or grains of hafnia is 1nm to 10µm.

In further examples of the present disclosure, including further examples of the above, the thickness of the layer is 5 to 1000 µm.

### BRIEF DESCRIPTION OF FIGURES

The features of the disclosure believed to be novel and the elements characteristic of the invention are set forth with particularity in the appended claims. The figures are for illustration purposes only and are not drawn to scale. The disclosure itself, however, both as to organization and method of operation, can best be understood by reference to the description of the preferred embodiment(s) which follows, taken in conjunction with the accompanying drawings in which:
Fig. 1 schematically illustrates a partial cross section of an exemplary gas turbine engine.
Fig. 2 schematically illustrates a partial cross section of an embodiment of a CMC substrate with EBC coating system in which the EBC coating system has a hafnon topcoat layer containing a hafnia particles/grains distributed therein.
Fig. 3 schematically illustrates a partial cross section of another embodiment of a CMC substrate with EBC coating system in which the EBC coating system has a hafnon topcoat layer containing a hafnia particles/grains distributed therein.
Fig. 4 schematically illustrates a partial cross section of further embodiment of a CMC substrate with EBC coating system in which the EBC coating system has a hafnon topcoat layer containing a hafnia particles/grains distributed therein.

### DETAILED DESCRIPTION OF THE INVENTION

The embodiments of the present disclosure can comprise, consist of, and consist essentially of the features and/or steps described herein, as well as any of the additional or optional ingredients, components, steps, or limitations described herein or would otherwise be appreciated by one of skill in the art. It is to be understood that all concentrations disclosed herein are by weight percent (wt. %.) based on a total weight of the composition unless otherwise indicated.

Before explaining at least one embodiment of the inventive concepts disclosed herein in detail, it is to be understood that the inventive concepts are not limited in their application to the details of construction and the arrangement of the components or steps or methodologies set forth in the following description or illustrated in the drawings. In the following detailed description of the embodiments of the inventive concepts, numerous specific details are set forth in order to provide a more thorough understanding of the inventive concepts. It will be apparent to one skilled in the art, however, having the benefit of the instant disclosure that the inventive concepts disclosed herein may be practiced without these specific details.

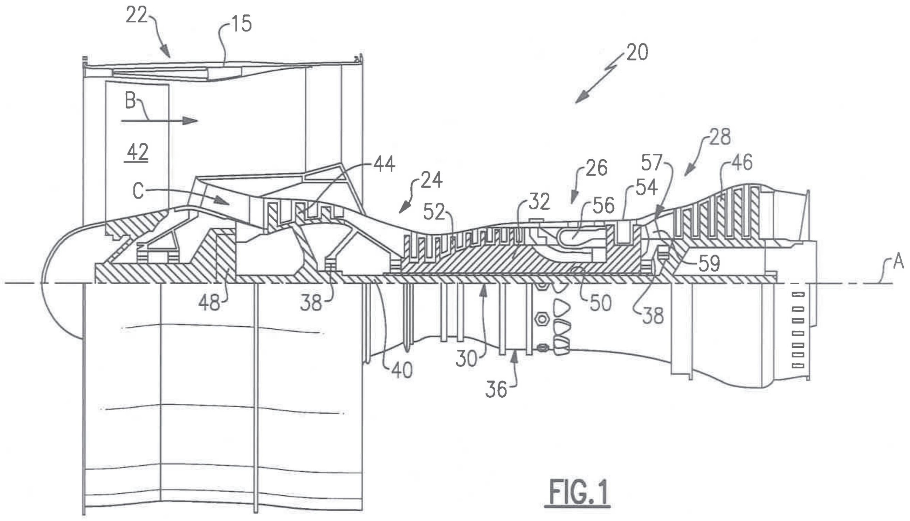

Fig. 1 schematically illustrates an example of a gas turbine engine 20 (i.e., a two-spool turbofan) which includes a fan section 22, a compressor section 24, a combustor section 26, and a turbine section 28. Fan section 22 drives air along a bypass flow path B in a bypass duct defined within a housing 15, and also along a core flow path C for compression in compressor section 24, with subsequent introduction into combustor section 26, followed by expansion through turbine section 28. Although Fig. 1 depicts a two-spool turbofan gas turbine engine, it should be understood that the concepts described herein are not limited to use with two-spool turbofans engines and may be applied to other types of turbine engines.

Engine 20 generally includes a low speed spool 30 and a high speed spool 32 mounted for rotation about an engine central longitudinal axis A, relative to an engine static structure 36, via several bearing systems 38. Various bearing systems 38 at various locations may alternatively or additionally be provided. The location of bearing systems 38 may be varied as appropriate to the application.

The low speed spool 30 generally includes an inner shaft 40 that interconnects, a first (or low) pressure compressor 44 and a first (or low) pressure turbine 46. Inner shaft 40 is connected to fan 42 through a speed change mechanism, which in this exemplary embodiment is illustrated as a geared structure 48 to drive fan 42 at a lower speed than the low speed spool 30. High speed spool 32 includes an outer shaft 50 that interconnects a second (or high) pressure compressor 52 and a second (or high) pressure turbine 54. Combustor 56 is positioned between high pressure compressor 52 and high-pressure turbine 54. A mid-turbine frame 57 of the engine static structure 36 may be arranged generally between the high-pressure turbine 54 and the low-pressure turbine 46. The mid-turbine frame 57 further supports bearing systems 38 in the turbine section 28. The inner shaft 40 and the outer shaft 50 are concentric and rotate via bearing systems 38 about the engine central longitudinal axis A which is collinear with their longitudinal axes.

The core air flow is first compressed by low pressure compressor 44, and then by the high-pressure compressor 52. Thereafter, the core air flow is mixed and burned with fuel in combustor 56, then expanded in high pressure turbine 54 and low-pressure turbine 46. The mid-turbine frame 57 includes airfoils 59 which are in the core airflow path C. The turbines 46 and 54 rotationally drive the respective low speed spool 30 and high speed spool 32 in response to the expansion. It will be appreciated that each of the positions of the fan section 22, compressor section 24, combustor section 26, turbine section 28, and fan drive gear system 48 may be varied. For example, gear system 48 may be located aft of the low-pressure compressor, or aft of the combustor section 26 or even aft of turbine section 28, and fan 42 may be positioned forward or aft of the location of gear system 48.

CMCs are also used in manufacturing of jet engine components, for example, jet engine blade outer air seals (BOAS), BOAS segments, other seals, vane airfoils and platforms therefor, blade airfoils and platforms therefor, and combustor liners. In comparison to superalloys, CMC materials are light weight (about 1/3 the weight of superalloys) and can withstand even higher operating temperatures, for example, <1200°C or even <1400°C.

Within the combustion section, and all sections downstream thereof, jet engine components made from CMCs are exposed to high temperature gas flow, and, in some cases, a corrosive gas flow, i.e., the gaspath. Coatings such as the above-mentioned EBCs are used to provide protection for these CMC components.

In general, CMC components are prepared by first creating a CMC preform which serves as the initial framework for creating the CMC component. The preform contains a stack of fabric sheets or plies in which the stack is formed via a layup process. The plies are made from ceramic fibers, or bundles of ceramic fibers called tows, held together with a binder. The fiber tows can be in the form of unidirectional tows or can be woven fibers. For example, the fibers can be woven into a two-dimensional fabric sheet or ply and then the plies are stacked during the layup process to form the preform. Alternatively, the preform can be in the form of a three-dimensional weave wherein, for example, a plurality of warp fibers are interwoven through a plurality of weft fiber layers. Binders can be used to help hold the fibers/plies together to provide a certain rigidity to the preform, for example, polymeric binders (e.g., polyvinyl alcohol (PVA) and polyvinyl butyral (PVB)).

The fibers used in the CMC preforms may be, for example, silicon carbide (SiC), carbon, mullite, zirconium carbide (ZrC), hafnium carbide (HfC), silicon nitride, aluminum oxide, or combinations thereof. The ceramic fibers may also be oxycarbide-, oxynitride-, carbonitride-, silicate-, boride-, phosphide-, or oxide-based fibers. In still further examples, the fibers are fully crystalline, partially crystalline, or predominantly amorphous or glassy. In one particular example, the fibers are SiC fibers.

The fibers of the preform can, optionally, be provided with one or several interphases deposited prior to introduction of a matrix material into the preform. This interphase coating can be, for example, a coating of boron nitride, silicon-doped boron nitride, boron-doped carbon, boron carbide, titanium nitride, or zirconium nitride which is applied by chemical vapor infiltration (CVI). The interphase coating is used to ensure that the composite will fail in a non-brittle manner by preventing crack formation and/or propagation.

After the CMC preform is formed by the layup, the preform is subjected to densification to add matrix material (e.g., SiC) to fill the remaining void space within the preform. This procedure stiffens and strengthens the fiber layers or woven plies of ceramic fiber tows to form the CMC. Thus, densification involves reducing the porosity within the preform, making it more solid and robust, by filing the remaining pores within the preform. The goal is to achieve a higher relative density, and ensure that the final CMC structure is compact and free of large voids. In one particular example, the CMC material contains SiC fibers within a SiC matrix, also referred to as a SiC/SiC composite.

Various methods can be used to add matrix material during densification. These include, but are not limited to, chemical vapor infiltration (CVI), melt infiltration (MI), for example, reactive melt infiltration (RMI) (such as liquid silicon infiltration (LSI)), and polymer infiltration and pyrolysis (PIP).

As mentioned above, EBCs are used to provide protection for CMC components from harsh environments and corrosive forces associated therewith. For example, EBCs provide a dense and at least partially hermetic seal for CMC materials reducing exposure of the surface and interior (via penetration through pores and cracks) to high temperature water vapor. Thus, EBCs reduce degradation of CMCs and extend the operational lifespan of components made therefrom. Desirable properties for EBCs include low porosity, good adherence to the substrate, chemical stability, phase stability, resistance to high temperature water vapor and other corrosive species (such as CMAS: CaO-MgO-Al₂O₃-SiO₂), thermal resistance, and a coefficient of thermal expansion that is similar to that of the substrate.

EBC coating systems are typically multilayered structures. For example, an EBC can be a two layered system made up of an initial bond coat applied to the surface of the CMC substrate and a top coat. Other EBC systems can have more layers, for example, a multilayered bond coat and a top coat layer, or a bond coat layer, an inner top coat layer, and an outer top coat layer. Additional coatings can be provided on top of EBC coating systems, for example, thermal barrier coatings and abradable coatings.

The bond coat layer is employed to promote adhesion of the EBC coating systems to the substrate. The bond coat layer can be a Si-containing material such as silicon, silica, silicates, and silicides, for example, a silicate material with one or more additives such as Al, Mg, Ba, Ca, B, and/or Na. The thickness of the bond coat layer can be, for example, up to about 1000 µm, such as 1 to 500 µm, 1 to 200 µm, 1 to 150 µm, 5 to 100 µm, 10 to 75 µm, or 20 to 50 µm.

EBC top coat layers can be made from a variety of materials or mixtures of materials. In accordance with the present disclosure, the EBC topcoat is a dual phase material containing a primary hafnon phase and a secondary hafnia phase dispersed therein. Hafnon (HfSiO₄) has a CTE that matches well with the CTE of CMC substrates such as those made from SiC/SiC composites. However, the resistance of hafnon to high temperature water vapor environments is not as good as other EBC materials, such as the corresponding oxide hafnia (HfO₂). On the other hand, hafnia exhibits a relatively high CTE with anisotropic behavior which can lead to the formation of cracks that can potentially cause spallation.

The present disclosure seeks to combine the advantageous EBC properties of hafnon with those of hafnia, while minimizing the disadvantageous properties of each of these materials. By using hafnia in the form of relatively small dispersed particles/grains (nanometer or micron range) the anisotropic thermal expansion behavior of hafnia can be minimized such that the overall CTE behavior of the topcoat layer remains isotropic. At the same time, the presence of the dispersed hafnia increases the corrosion resistance of the topcoat in comparison to topcoats made solely from hafnon. Additionally, the hafnia can further lead to an increase in CMAS protection since hafnia can act as a binder to bind silica from CMAS resulting in hafnon formation.

The dispersed hafnia phase can be evenly distributed throughout the hafnon phase, i.e., a homogeneous distribution. Alternatively, the hafnia concentration within the hafnon phase can vary. For example, in the region near the CMC substrate, the topcoat layer can exhibit a low hafnia concentration to take advantage of the advantageous CTE match between the hafnon phase and the CMC substrate. The hafnia content within in the topcoat can then increase towards the outer surface thereof so that the outer region of the topcoat will exhibit enhanced corrosion resistance due to the higher hafnia content. Thus, a hafnia concentration gradient can be present in the topcoat wherein the hafnia content increases in the direction from the CMC substrate/EBC coating system interface to the outer surface of the topcoat (i.e., the surface exposed to the high-energy, high temperature gas flow).

As an example, the topcoat layer can exhibit a concentration gradient from pure hafnon to pure hafnia. In other embodiments, the topcoat can have a hafnia concentration of, for example, 0-30 vol.% (such as 5 - 30 vol.% or 5 - 25 vol.% or 10 - 20 vol.% or 5 - 15 vol.%) near the CMC substrate/EBC coating system interface. The hafnia concentration can then increase through the thickness of the topcoat so that near the outer surface of the topcoat the hafnia concentration can be, for example, 20-100 vol.% (such as 30-100 vol.% or 20 - 95 vol.% or 20 - 85 vol.% or 30 - 95 vol.% or 30 - 85 vol.% or 40 - 80 vol.%). In one embodiment, the hafnia/hafnon concentration ratio near the CMC substrate/EBC coating system interface is 10/90 and this ratio can increase throughout the topcoat thickness to a hafnia/hafnon concentration ratio of 90/10 at the outer surface of the topcoat. It should be noted that the concentration gradient can be continuous, i.e., linear. Alternatively, the concentration gradient can increase in a stepwise manner.

As a further alternative, rather than the top coat having a homogenous hafnia distribution or having a hafnia concentration gradient, the dispersion can be regional. In other words, different locations/regions within the topcoat can exhibit higher hafnia concentrations in comparison to adjacent locations/regions in order to tailor the topcoat properties to local environmental demands.

The thickness used for the EBC top coat layer can vary. For example, the EBC topcoat layer can have a thickness of up to about 1,000 µm, such as 5 to 1000 µm, 25 to 1,000 µm, 25 to 500 µm, or 50 to 200 µm.

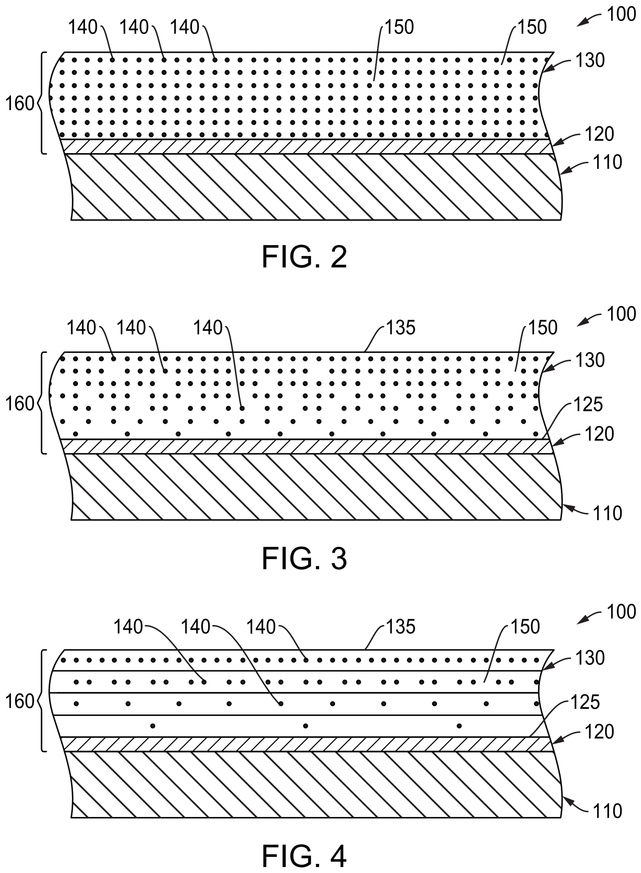

Fig. 2 illustrates a cross sectional view of a portion of CMC component 100 having an EBC coating system in accordance with the present disclosure. The CMC component substrate 110 is coated with an EBC coating system 160 which includes a bond coat layer 120 and a topcoat layer 130. The substrate 110 can be, for example, a SiC/SiC CMC composite and the bond coat layer 120 can be a Si-based material. The topcoat layer 130 contains a secondary hafnia phase 140 dispersed within a primary hafnon phase 150. In this embodiment, the hafnia phase 140 is homogeneously distributed throughout the primary hafnon phase.

The size of the individual particles/grains of hafnia within the top coat is relatively small but can vary within a wide range. For example, the particle/grain size can be 1nm to 10µm, such as 1 - 500nm, 50 - 400nm, 100 - 250nm, 100 - 500nm, 500nm to 100µm, 5 - 80µm, or 10 - 75µm or 25 - 50µm.

Fig. 3 illustrates a cross sectional view another embodiment of the present disclosure. As in the embodiment of Fig. 2, the embodiment of Fig. 3 shows a portion of a CMC component 100 having an EBC coating system. The CMC component substrate 110 is coated with an EBC coating system 160 which includes a bond coat layer 120 and a topcoat layer 130. The topcoat layer 130 contains a secondary hafnia phase 140 dispersed within a primary hafnon phase 150. However, in this embodiment, the hafnia phase 140 is not homogeneously distributed throughout the primary hafnon phase. Instead, the concentration of hafnia increases from the bond coat/EBC top coat interface 125 to the outer surface 135 of the topcoat EBC layer 130. In the embodiment of Fig. 3 the hafnia concentration gradient is shown as a linear gradient.

Fig. 4 is similar to Fig. 3 in that it also shows the concentration of hafnia 140 increasing within primary hafnon phase 150 from the bond coat/EBC top coat interface 125 to the outer surface 135 of the topcoat EBC layer 130. However, in this embodiment the hafnia concentration increases in a step-wise manner.

The layers of the EBC can be applied to the CMC substrate by a variety of processes. For example, EBCs can be prepared by thermal spraying such as plasma spraying using powders to form deposited layers on the substrate being treated. Typical thermal spraying processes include air or atmospheric plasma spraying (APS), vacuum plasma spraying (VPS), low pressure plasma spraying (LPPS), shrouded plasma spraying, suspension plasma spraying (SPS), and hybrid forms thereof. Additionally, EBC coating systems can be applied via slurry coating wherein the slurry contains coating materials dispersed in a solvent or dispersion medium.

To form a coating layer by thermal spraying, a powder composition of a selected material such as hafnon is heated and then deposited onto a substrate to form a coating. For example, a hafnon coating can be produced by APS wherein a plasma jet or plume (derived from, for example, Ar, N, H₂, He, or any mixture thereof) is generated and discharged from a plasma gun or torch. The powder particles are introduced into the plasma jet and become at least semi-molten. The particles then impinge on the surface of a substrate to form splats which then form the coating.

During thermal spraying of hafnon (HfSiO₄) powder, there can be a conversion of the hafnon to hafnia (HfO₂) and gaseous SiO₂. Depending on the conditions of the thermal spraying, this conversion can be minor to significant. The formation of hafnia during the thermal spray process results in small particles or grains of hafnia being present within the primary hafnon phase.

In accordance with the present disclosure, the parameters of the thermal spraying can be adjusted to achieve a desired hafnon/hafnia concentration ratio in the resultant coating. For example, in an APS process, process parameters that can be adjusted include plasma current, plasma gas composition (e.g., changing the Ar/H₂ ratio or using nitrogen or helium as the plasma gas), powder feed rate, carrier gas flowrate, gun nozzle design, cooling gas flow, if any, and the distance between the plasma gun and the surface of the substrate to be coated. These parameters can be used to adjust process outputs such as powder particle temperature, velocity (and duration) of the particles within the plume, and the impact velocity of the particles at deposition. The amount of conversion of hafnon to hafnia (i.e., loss of SiO₂ due to evaporation) increases as the particle temperature within the plasma plume increases.

For example, the thermal spraying process parameters can be selected so that a constant ratio of hafnon and hafnia is achieved during the process. This will result in a homogenous distribution in the topcoat layer. Alternatively, the thermal spraying process parameters can be changed in a continuous or stepwise manner in order to increase the loss of SiO₂ and thereby increase the hafnia/hafnon ratio as the layer is deposited. This results in the formation of a concentration gradient within the layer in which the hafnia/hafnon concentration ratio in a continuous or stepwise manner.

The particle size and particle size distribution for the hafnon powder used in the thermal spraying processes can vary. For example, particle sizes for the powder can be 1µm to 100µm such as 1µm to 75µm or 1µm to 50µm or 1µm to 40µm or 5µm to 50µm or 10µm to 40µm. The particle size distribution can be such that, for example, D10 is ≤15 µm (e.g., 1-15µm), D50 is 10-45µm, and D90 is 25-75 µm, or D10 is 5 to 15µm, D50 is 10-35µm, and D90 is 30-65µm or D10 is ≤10 µm (e.g., 1 to 10µm), D50 is 20-35µm, and D90 is 35-65µm or D10 is ≤10 µm (e.g., 1 to 10µm), D50 is 15-25µm, and D90 is 30-45µm.

Hafnon powder is made by reacting hafnium oxide (HfO₂) powder and silica (SiO₂) powder (equal atomic ratios). Thus, as an alternative thermal spraying process, a mixture of hafnium oxide (HfO₂) powder and silica (SiO₂) powder can be used rather than hafnon (HfSiO₄) powder. Various ratios of the two powders can be used. The resultant coating would be initially amorphous and then by using an appropriate thermal treatment one can obtain a crystalline hafnium silicate (hafnon) coating.

As noted above, during thermal spraying of hafnon (HfSiO₄) powder, there can be a conversion of the hafnon to hafnia (HfO₂) and gaseous SiO₂. Similarly, during thermal spraying of hafnium oxide (HfO₂) powder and silica (SiO₂) powder, a part of the silica will be converted to gaseous SiO₂ and thus not be incorporated into the coating. As a result, by adjusting the parameters of the thermal spraying (as discussed above), including the relative amounts of hafnium oxide powder and silica powder hafnium oxide (HfO₂) powder and silica (SiO₂) powder, one can obtain a coating which, following thermal treatment, exhibits a primary hafnon phase with a dispersed hafnia phase. For example, various powder ratios can be used during the process such as an initial hafnia to silica ratio of around 99:1, to obtain an initial higher hafnia content, increasing to around 1:1, with intermediate ratios of, for example, 80:20, 75:25, 70:30, 65:45, and 60:40.

Here also, the thermal spraying process parameters can be selected so that a constant ratio of hafnon and hafnia is achieved during the process, resulting in a homogenous distribution in the topcoat layer. Alternatively, the thermal spraying process parameters can be changed in a continuous or stepwise manner to increase the hafnia/hafnon ratio as the layer is deposited. As mentioned above, this results in the formation of a concentration gradient within the layer in which the hafnia/hafnon concentration ratio in a continuous or stepwise manner.

The particle size and particle size distribution for the hafnium oxide powder and silica powder used in the thermal spraying process can vary. For example, particle sizes for each powder can be 1µm to 100µm such as 1µm to 75µm or 1µm to 50µm or 1µm to 40µm or 5µm to 50µm or 10µm to 40µm. The particle size distribution can be such that, for example, D10 is ≤15 µm (e.g., 1-15µm), D50 is 10-45µm, and D90 is 25-75 µm, or D10 is 5 to 15µm, D50 is 10-35µm, and D90 is 30-65µm or D10 is ≤10 µm (e.g., 1 to 10µm), D50 is 20-35µm, and D90 is 35-65µm or D10 is ≤10 µm (e.g., 1 to 10µm), D50 is 15-25µm, and D90 is 30-45µm.

As mentioned above, the EBC topcoat layer can also be applied by slurry coating. In accordance with the present disclosure, a powder composition containing hafnon and hafnia particles is dispersed in a solvent or dispersion medium (e.g., an organic solvent) to form a slurry. The slurry is then applied to the substrate and dried to remove the solvent/dispersion medium. The powder is then sintered to form the layer. The process can be repeated several times to increase the topcoat thickness and to change the hafnia/hafnon concentration ratio.

For example, a slurry having a hafnia/hafnon concentration ratio of 30/70 (or 40/60 or 50/50) can be applied several times to a substrate to obtain a coating having a desired thickness and a homogeneous distribution. Alternatively, several slurries with increasing hafnia/hafnon concentration ratio (e.g., first slurry: 10/90 hafnia/hafnon; second slurry: 50/50 hafnia/hafnon; and third slurry: 90/10 hafnia/hafnon) can be applied successively to the substrate. This yields a topcoat in which the hafnia/hafnon concentration increases in a stepwise manner.

The particle size and particle size distribution for the hafnon and hafnia particles used in the slurry coating process can vary. For example, the particle size for the hafnon particles can be 1µm to 75µm such as 1µm to 50µm or 1µm to 40µm or 5µm to 50µm or 10µm to 40µm. The hafnon particle size distribution can be such that, for example, D10 is ≤15 µm (e.g., 1-15µm), D50 is 10-35µm, and D90 is 25-65 µm, or D10 is 5 to 15µm, D50 is 10-30µm, and D90 is 25-50µm or D10 is ≤10 µm (e.g., 1 to 10µm), D50 is 15-30µm, and D90 is 30-50µm or D10 is ≤10 µm (e.g., 1 to 10µm), D50 is 15-25µm, and D90 is 30-45µm. It is desirable to use hafnia particles of smaller size to reduce the impact of their anisotropic CTE behavior. For example, the size of the hafnia particles can be 1nm to 15µm such as 10nm to 15µm 1µm to 15µm or 1µm to 10µm or 1µm to 5µm.

The EBC topcoat of the present disclosure combines the advantageous EBC properties of hafnon and hafnia. The hafnon primary phase provides a desirable CTE match with the underlying CMC substrate, which permits a denser coating and minimizes the occurrence of spallation. The dispersed hafnia, on the other hand, provides desirable corrosion resistance to the topcoat in comparison to topcoats made solely from hafnon. Additionally, as noted above, the presence of hafnia can lead to an increase in CMAS protection due to the ability of hafnia to bind silica.

The corresponding structures, material, acts, and equivalents of all means or steps plus function elements in the claims below are intended to include any structure, material, or act for performing the function in combination with other claimed elements are specifically claimed. The description of the present invention has been presented for purposes of illustration and description, but is not intended to be exhaustive or limited to the invention in the form disclosed. Many modifications and variations will be apparent to those of ordinary skill without departing from the scope and the invention. The embodiment was chosen and described in order to best explain the principles of the invention and the practical application, and to enable others of ordinary skill in the art to understand the invention for embodiments with various modifications as are suited to the particular use contemplated.

Modifications and equivalents may be made to the features of the claims without departing from the scope of the invention. Thus, it is intended that the present invention covers the modifications and variations disclosed above provided that these changes come within the scope of the claims and their equivalents.

While the present disclosure has been particularly described, in conjunction with specific preferred embodiments, it is evident that many alternatives, modifications and variations will be apparent to those skilled in the art in light of the foregoing description. It is therefore contemplated that the appended claims will embrace any such alternatives, modifications and variations as falling within the true scope of the present disclosure.

## Claims

1. A coated substrate composite (100) comprising:
a ceramic matrix composite substrate (110) comprising ceramic fiber tows within a ceramic matrix;
an environmental barrier coating (EBC) system (160) applied to the substrate (110) wherein the coating system (160) comprises a layer (130) having a primary hafnon phase (150) and a dispersed hafnia phase (140).

2. A coated substrate according to claim 1, wherein the layer (130) having a primary hafnon phase (150) and a dispersed hafnia phase (140) is a topcoat layer (130) and the EBC system (160) further includes a bond coat layer (120) between the substrate (110) and the topcoat layer (130).

3. A coated substrate according to claim 1 or 2, wherein the substrate (110) is a SiC/SiC composite, optionally wherein the bond coat layer (120) is a Si-containing material.

4. A coated substrate according to claim 2 or 3, wherein the bond coat layer (120) has a thickness of 1 to 1000 µm.

5. A coated substrate according to any preceding claim, wherein the dispersed hafnia phase (140) is evenly distributed throughout the hafnon phase (150).

6. A coated substrate according to any of claims 1 to 4, wherein the layer (130) has a hafnia concentration gradient wherein the hafnia content increases from an interface (125) of the CMC substrate (110) and EBC coating system (160) to top surface (135) of the layer (130).

7. A coated substrate according to any of claims 1 to 4, wherein the layer (130) has a hafnia concentration gradient wherein the hafnia concentration is 0-30 vol.% at a CMC substrate/EBC coating system interface (125) and the hafnia concentration increases through the thickness of the layer (130) to a hafnia concentration of 20-100 vol.% at a top surface (135) of the layer (130).

8. A coated substrate according to any preceding claim, wherein the size of the dispersed particles or grains of hafnia is 1nm to 10µm.

9. A coated substrate according to any preceding claim, wherein the thickness of the layer (130) is 5 to 1000 µm.

10. A method of preparing a coated substrate (100) comprising:
providing ceramic matrix composite substrate (110) comprising ceramic fiber tows within a ceramic matrix;
applying an environmental barrier coating (EBC) system (160) to the substrate (110), wherein the coating system (160) comprises a layer (130) having a primary hafnon phase (150) and a dispersed hafnia phase (140); and
the layer (130) is applied by: (a) thermal spraying a powder composition containing hafnium silicate or a powder composition containing a mixture of hafnium oxide powder and silica powder; or (b) slurry coating wherein the slurry contains hafnium silicate particles and hafnia particles.

11. The method according to claim 10, wherein the coating system (160) is applied to the substrate (110) by air plasma spraying (APS), vacuum plasma spraying (VPS), low pressure plasma spraying (LPPS), shrouded plasma spraying, or suspension plasma spraying (SPS).

12. The method according to claim 10 or 11, wherein the layer (130) having a primary hafnon phase (150) and a dispersed hafnia phase (140) is a topcoat layer (130) and the EBC system (160) further includes a bond coat layer (120) between the substrate (110) and the topcoat layer (130), optionally wherein the bond coat layer (120) has a thickness of 1 to 1000 µm and the topcoat layer (130) has a thickness of 5 to 1000 µm.

13. The method according to any of claims 10 to 12, wherein the layer (130) is applied by thermal spraying a hafnon powder composition in which the hafnon powder particles have:
an average particle size for the powder can be 1µm to 75µm; or
a particle size distribution in which D10 is ≤15 µm, D50 is 10-45µm, and D90 is 25-75 µm.

14. The method according to any of claims 10 to 13, wherein the layer (130) is applied by slurry coating, optionally wherein the slurry contains hafnium silicate particles having a particle size of 1µm to 75µm, and hafnia particles having a particle size of 1nm to 15µm.

15. A jet engine (20)component comprising:
a ceramic matrix composite substrate (110) comprising ceramic fiber tows within a ceramic matrix;
an environmental barrier coating (EBC) system (160) applied to the substrate (110) wherein the coating system (160) comprises a layer (130) having a primary hafnon phase (150) and a dispersed hafnia phase (140).
wherein said component is a turbine blade, turbine vane, blade outer air seal, or combustor liner.
